# EUROPÄISCHE PATENTSCHRIFT

(11) **EP 2 126 324 B1**
(45) Veröffentlichungstag und Bekanntmachung des Hinweises auf die Patenterteilung: **18.08.2010**
(21) Anmeldenummer: 08716094.1
(22) Anmeldetag: 28.02.2008
(51) Int. Cl.: F02M 25/07, F02D 9/08, F16K 15/02

(54) **ABGAS-RÜCKSCHLAGVENTIL**
EXHAUST GAS CHECK VALVE
SOUPAPE DE RETENUE POUR GAZ DE COMBUSTION

(30) Priorität: 02.03.2007 DE 102007010162; 23.03.2007 DE 202007004323 U
(43) Veröffentlichungstag der Anmeldung: 02.12.2009
(73) Patentinhaber: ElringKlinger AG, 72581 Dettingen (DE)
(72) Erfinder: WALZ, Timo, 75053 Gondelsheim (DE)
(74) Vertreter: Haecker, Walter
(86) Internationale Anmeldenummer: PCT/EP2008/001565
(87) Internationale Veröffentlichungsnummer: WO 2008/107107

(56) Entgegenhaltungen:
- DE-A1- 19 830 230
- DE-A1-102005 020 482

## Beschreibung

Die Erfindung betrifft ein Abgas-Rückschlagventil für eine von einer Abgasseite zu einer Frischluftseite eines Hubkolben-Verbrennungsmotors führende Abgasrückführleitung, welches ein bewegliches, von mehreren Rückstellfedern gehaltenes Flachmaterial-Ventilelement sowie einen Ventilsitz mit einer vom Ventilelement in einer Ventilelement-Schließstellung zumindest nahezu verschließbaren, eine Achse des Rückschlagventils definierenden Abgas-Durchlassöffnung aufweist, wobei die Rückstellfedern am Umfang des Ventilelements im Abstand voneinander angeordnet sind und das Ventilelement durch einen die Abgas-Durchlassöffnung in Richtung auf das Ventilelement anströmenden Abgasstrom bzw. durch einen in dieser Richtung wirkenden Überdruck entgegen der Wirkung der Rückstellfedern in Richtung der Ventilachse vom Ventilsitz wegbewegbar ist.

Eine Möglichkeit, die Schadstoffemissionen von Hubkolben-Verbrennungsmotoren ohne nennenswerten Kraftstoff-Mehrverbrauch zu senken, bietet die Abgasrückführung (AGR), bei der ein Teil der Abgase in die Verbrennungsräume des Motors zurückgeführt wird; da dadurch die Verbrennungstemperaturen in den Brennräumen abgesenkt werden, wird auch die Bildung von Stickoxiden (NOₓ) verringert.

Da bei aufgeladenen Motoren das Druckniveau im Motor-Einlasskanal stromabwärts derjenigen Stelle, an welcher die Aufladung zum Beispiel durch einen Kompressor oder einen Abgasturbolader erfolgt, zumindest kurzzeitig höher ist als das Druckniveau im Abgas-Auslasskanal des Motors, würde dann bei einer Abgasrückführung ohne ein Abgas-Rückschlagventil der Gasstrom in der Abgasrückführleitung vom Motor-Einlasskanal zum Abgas-Auslasskanal verlaufen. Andererseits wäre eine Rückführung der Abgase zu einer Stelle stromaufwärts der die Aufladung bewirkenden Aufladeeinheit unwirtschaftlich, da dann zum Beispiel aus Gründen der Korrosionsbeständigkeit der Aufladeeinheit für diese hochwertige und deshalb teure Werkstoffe verwendet werden müssten. Nun ist der Druck im Abgasstrang einen Hubkolben-Verbrennungsmotors zeitlich nicht konstant, sondern schwankt stark im Rhythmus der Verbrennungsabläufe in den Brennräumen (Zylindern) des Motors, wobei die im Abgasstrang auftretenden Druckspitzen jeweils nach der Öffnung eines der Auslassventile des Motors auftreten und das Druckniveau dieser Druckspitzen über dem Druck im Motor-Einlasskanal liegt. Da bei einem 4-Takt-Motor das Auslassventil eines Zylinders nach jeweils 720° Kurbelwellen-Drehwinkel geöffnet wird, ist die Frequenz der im Abgasstrang auftretenden Druckschwingungen bei einem 4-Zylinder-Motor bereits bei 600 Umdrehungen pro Minute relativ hoch (sie beträgt dann 20 Hz) und die Periodendauer der Druckschwingungen im Abgasstrang beträgt dann nur 0,1 Sekunden, wobei die Zeit, während welcher im Abgasstrang Überdruck herrscht, d.h. die Zeit, während welcher das Auslassventil offen ist, nur ca. 1/6 der Periodendauer der Abgasdruckschwingungen beträgt. Aus diesem Grund muss ein Abgas-Rückschlagventil sehr kurze Schaltzeiten haben, d.h. sich in kürzester Zeit öffnen und schließen können.

Bei einem bekannten, sich aus der DE-A-199 53 198 ergebenden Abgas-Rückschlagventil ist ein eine rechteckige Abgas-Durchlassöffnung umschließender Ventilsitz an einem prismenförmigen Teil eines Ventilkörpers ausgebildet, an dem ein als rechteckige Blattfeder gestaltetes Ventilelement mit seinem einen Schmalseitenbereich befestigt ist, und zwar dadurch, dass in diesem Bereich das Ventilelement zwischen dem Ventilkörper und einem gleichfalls rechteckigen, plattenartigen Anschlag eingespannt ist, welcher mit dem Ventilelement ungefähr deckungsgleich ist, außerhalb des Einspannbereichs jedoch gegenüber dem Ventilsitz so geneigt ist, dass sich das Ventilelement um den Einspannbereich um einen kleinen spitzen Winkel hochschwenken lässt und damit vom Ventilsitz abhebt - der Anschlag begrenzt also den Schwenkwinkel des Ventilelements und definiert dessen Offenstellung. Zu Abdicht- und Dämpfungszwecken ist der Ventilsitz mit einer thermisch belastbaren elastomeren Beschichtung versehen. Dieses bekannte Abgas-Rückschlagventil hat ein ganze Reihe von Nachteilen: Dadurch, dass sich das Ventilelement um seinen einen Schmalseitenbereich nur um einen verhältnismäßig kleinen spitzen Winkel aufschwenken lässt, ist der Durchströmquerschnitt für den Abgasstrom bei geöffnetem Rückschlagventil verhältnismäßig klein; da zum Öffnen des Rückschlagventils die das Ventilelement bildende rechteckige Blattfeder über die ganze Länge ihres Schmalseiten-Bereichs abgebogen werden muss, bedarf eine Öffnung des Rückschlagventils eines erheblichen Druckunterschieds zwischen Anström- und Abströmseite des Ventils, und schon ein verhältnismäßig kleiner Abfall dieses Druckunterschiedes hat zur Folge, dass das Rückschlagventil nicht mehr vollständig offen ist; da das rechteckige Ventilelement um seinen einen Schmalseitenbereich geschwenkt wird, haben die vorstehend beschriebenen kurzen Öffnungs- und Schließzeiten hohe Geschwindigkeiten des Ventilelements im Bereich seiner freien Schmalseite zur Folge, und die raschen peitschenartigen Bewegungen des Ventilelements können zur einer Zerstörung der das Ventilelement bildenden Blattfeder führen; schließlich handelt es sich bei diesem bekannten Rückschlagventil um eine verhältnismäßig aufwendige Konstruktion, zum einen wegen der komplizierten Gestalt des Ventilkörpers und zum anderen deshalb, weil das Ventilelement und der dieses am Ventilkörper haltende Anschlag mittels Schrauben am Ventilkörper befestigt sind. Vor allem wegen der beiden vorstehend zunächst aufgeführten Nachteile lassen sich die für moderne Motoren geforderten hohen Abgasrückführraten mit diesem bekannten Rückschlagventil nicht realisieren - gefordert wird derzeit, dass bis zu 25% der Abgase in die Motorbrennräume zurückgeführt werden.

Ein hinsichtlich seines Abgas-Durchströmquerschnitts, seines Ansprechverhaltens und hinsichtlich der Dauerhaltbarkeit des Ventilelements verbessertes Abgas-Rückschlagventil ergibt sich aus den Figuren 4 und 5 der DE-A-10 2005 020 482. Bei diesem Rückschlagventil besteht das Ventilelement aus Federstahlblech, hat die Gestalt einer Kreisscheibe und ist mit drei Rückstellfedern versehen, welche mit dem Ventilelement einstückig sind und in Folge dessen gleichfalls aus Federstahlblech bestehen; jede Rückstellfeder hat in einer Draufsicht auf das Ventilelement im Wesentlichen die Gestalt eines streifenartigen Kreisbogens, welcher an einem ersten Ende der Rückstellfeder über einen kleinen 90°-Bogens, welcher in Richtung auf das Zentrum des plättchenförmigen Ventilelements gebogen ist, in das Ventilelement übergeht und am anderen, zweiten Ende der Rückstellfeder über einen weiteren kleinen 90°-Bogen in einen bezüglich des Zentrums des Ventilelements radial nach außen weisenden Befestigungsbereich übergeht; diese Befestigungsbereiche der drei Rückstellfedern sind an einem mehrteiligen Gehäuse des Rückschlagventils festgelegt, und bei kräftefreiem Ventilelement liegt dieses auf einem Ventilsitz auf, welcher von einem Ende eines Abgas-Einlassstutzens des Ventilgehäuses gebildet wird. In einer Draufsicht auf das Ventilelement erstreckt sich jede der drei Rückstellfedern über etwas weniger als 120° des Umfangs des Ventilelements, und die ersten Enden der Rückstellfedern sind längs des Umfangs des Ventilelements in gleichen 120°-Abständen voneinander angeordnet. Wird bei diesem bekannten Abgas-Rückschlagventil das Ventilelement von einem in diesen Einlassstutzen einströmenden Abgasstrom angeströmt, hebt das plättchenförmige Ventilelement in Richtung der Achse des Einlassstutzens vom Ventilsitz ab, wenn der Gasdruck auf der Anströmseite des Ventilelements größer ist als auf der vom Ventilsitz abgewandten Seite des Ventilelements. Bei diesem bekannten Rückschlagventil bewegt sich also das plättchenförmige Ventilelement insgesamt senkrecht zu der vom Ventilsitz bzw. vom plättchenförmigen Ventilelement definierten Ebene zwischen seiner Schließstellung und seiner Offenstellung, und bei geöffnetem Rückschlagventil kann der in dessen Einlassstutzen einströmende Abgasstrom nahezu über den gesamten Umfang des plättchenförmigen Ventilelements an diesem und den Rückstellfedern vorbei das Rückschlagventil durchströmen. Bei dieser Ausführungsform des bekannten Rückschlagventils ist kein Anschlagelement für das Ventilelement vorgesehen.

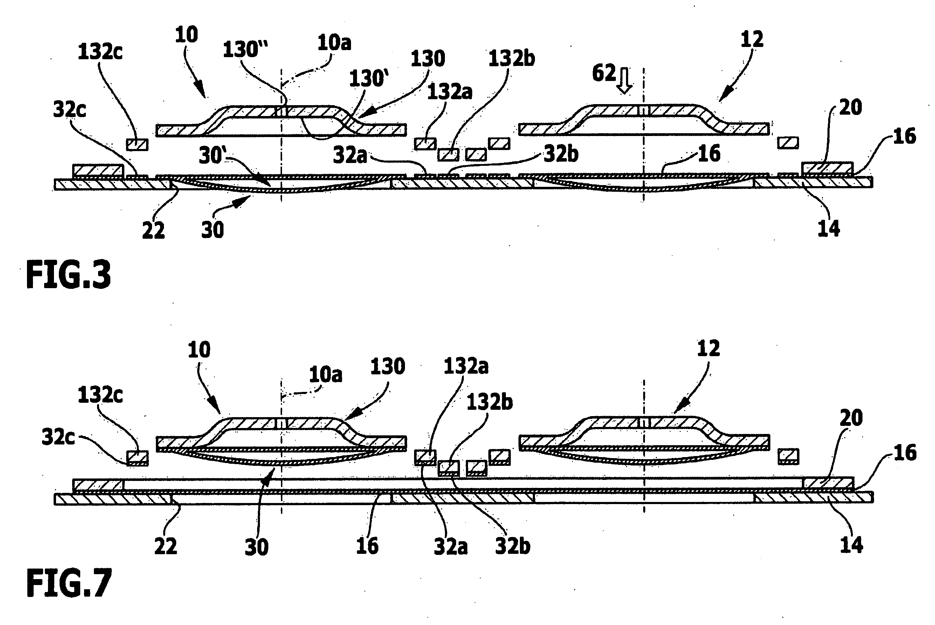

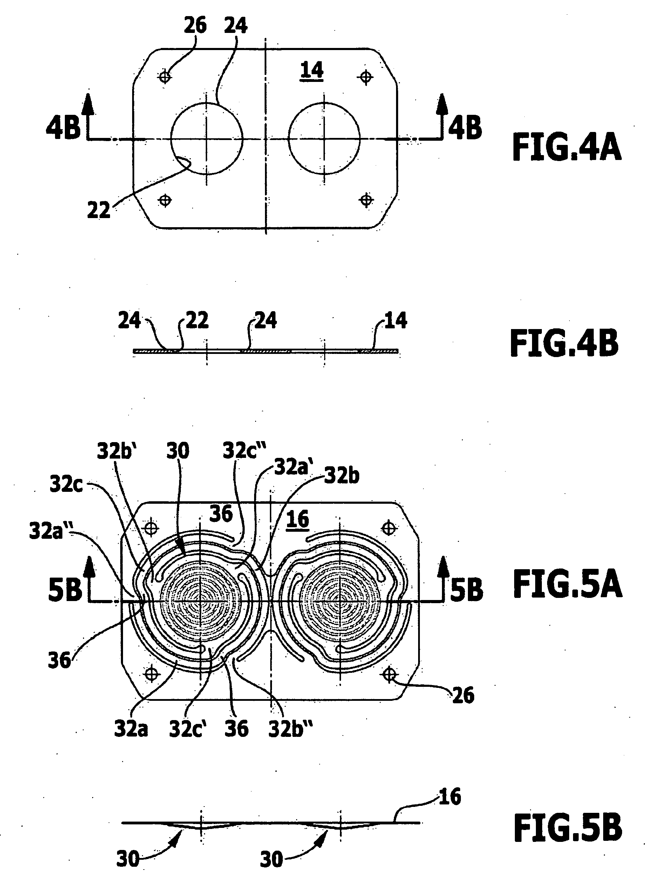

In der DE-A-10 2005 020 482 wird ferner eine abgewandelte Ausführungsform des Rückschlagventils beschrieben, bei welcher ein plättchenförmiges Ventilelement in seiner Schließstellung durch eine Schraubendruckfeder gegen den vom Einlassstutzen gebildeten Ventilsitz gepresst wird, wobei diese Schraubendruckfeder gegen die vom Einlassstutzen abgewandte Seite des Ventilelements anliegt (Ausführungsform nach den Figuren 7 bis 9); ferner sind bei dieser abgewandelten Ausführungsform Anschlagelemente für das Ventilelement vorgesehen, welche den Hub des Ventilelements bis in eine Offenstellung des Ventilelements begrenzen und von fingerartigen, sich in Richtung der Ventilachse erstreckenden Vorsprüngen eines Auslassstutzens des Ventilgehäuses gebildet werden, die in die Schraubendruckfeder in Richtung auf das Ventilelement hineinragen. Bei dieser abgewandelten Ausführungsform kann gemäß dem Abschnitt [0048] der DE-A-10 2005 020 482 die Schraubendruckfeder entfallen, wenn in dieser abgewandelten Ausführungsform das mit den vorstehend beschriebenen drei Rückstellfedern versehene Ventilelement der Ausführungsform nach den Figuren 4 und 5 verwendet wird.

Bei dem sich aus den Figuren 7 bis 9 in Verbindung mit dem Abschnitt [0048] der DE-A-10 2005 020 482 ergebenden bekannten Abgas-Rückschlagventil können aufgrund der vorstehend beschriebenen kurzen Öffnungs- und Schließzeiten eines Abgas-Rückschlagventils und der damit verbundenen hohen Beschleunigungen und Verzögerungen des aus dem plättchenförmigen Ventilelement und seinen drei Rückstellfedern bestehenden Bauteils die Rückstellfedern "überschwingen", wenn das Ventilelement beim Öffnen gegen die vom Auslassstutzen des Ventilgehäuses gebildeten Anschlagelemente anschlägt und schlagartig zu einem kurzzeitigen Stillstand kommt; ein solches Überschwingen (weitere Auslenkung der zwischen den Enden der Rückstellfedern liegenden Federbereiche) führt zu Spannungsspitzen in den Endbereichen der Rückstellfedern, welche Dauerbrüche der Rückstellfedern zur Folge haben können.

Der Erfindung lag nun die Aufgabe zu Grunde, ein Abgas-Rückschlagventil der eingangs definierten Art hinsichtlich seiner Dauerhaltbarkeit zu verbessern, und diese Aufgabe wird erfindungsgemäß dadurch gelöst, dass in dem Rückschlagventil Dämpfungsmittel vorgesehen werden, durch welche eine vergleichsweise sanfte Abbremsung des Ventilelements bewirkt wird, wenn sich dieses am Ende seines Hubs derjenigen Stellung, nämlich seiner Offenstellung, nähert, in der das Rückschlagventil ganz geöffnet ist.

Besonders einfach lässt sich das erfindungsgemäße Lösungsprinzip durch mindestens ein federnd gehaltenes Anschlagelement oder dadurch lösen, dass für das Ventilelement ein Anschlag vorgesehen wird, welcher aufgrund einer entsprechenden Gestaltung des Anschlag- und/oder des Ventilelements zusammen mit letzterem einen zumindest nahezu dichten Gasraum bildet, wenn sich das Ventilelement in seiner Offenstellung befindet, denn dann wird die Bewegung des Ventilelements in Richtung auf seine Offenstellung abgebremst, wenn kurz vor Schließen des Gasraumes die sich in diesem befindlichen Gase durch einen immer enger werdenden Schlitz zwischen Anschlag und Ventilelement entweichen beziehungsweise zwischen Anschlag und Ventilelement verdichtet werden müssen. Bei bevorzugten Ausführungsformen des erfindungsgemäßen Rückschlagventils werden beide Maßnahmen miteinander kombiniert.

Die erste Maßnahme lässt sich am einfachsten dadurch realisieren, dass das Rückschlagventil auf der vom Ventilsitz abgewandten Seite des Ventilelements mindestens ein den Hub des Ventilelements bis in eine Ventilelement-Offenstellung begrenzendes Anschlagelement aufweist, welches von mindestens einem Federelement in Richtung der Ventilachse beweglich gehalten ist, sodass das Ventilelement vergleichsweise sanft abgebremst wird, wenn es das Anschlagelement berührt und zusammen mit diesem noch einen geringen Weg in Richtung der Ventilachse zurücklegt.

Die vorstehend erwähnte zweite Maßnahme lässt sich dadurch besonders einfach realisieren, dass das Rückschlagventil auf der vom Ventilsitz abgewandten Seite des Ventilelements wiederum ein den Hub des Ventilelements bis in eine Ventilelement-Offenstellung begrenzendes Anschlagelement aufweist, welches in Richtung der Ventilachse gesehen, das heißt in einer Draufsicht in Richtung senkrecht zu einer von der Abgas-Durchlassöffnung definierten Ebene, ebenso wie das Ventilelement plättchenförmig gestaltet ist, und dass das Ventilelement und das Anschlagelement so geformt sind, dass in der Offenstellung des Ventilelements dieses zusammen mit dem Anschlagelement einen Gasraum definiert, welcher durch das sich in seiner Offenstellung befindliche Ventilelement und das Anschlagelement mindestens nahezu geschlossen ist. Auch bei einer solchen Gestaltung des erfindungsgemäßen Rückschlagventils ist es vorteilhaft, wenn das Anschlagelement von mindestens einem Federelement in Richtung der Ventilachse beweglich gehalten wird, um die Dämpfung der Ventilelementbewegung bei sich öffnendem Rückschlagventil noch weiter zu verbessern.

Aus demselben Grund ist es von Vorteil, bei einem erfindungsgemäßen Rückschlagventil gemäß dem ersten Lösungsweg das Anschlagelement und das Ventilelement - in Richtung der Ventilachse gesehen - plättchenförmig zu gestalten und das Ventilelement sowie das Anschlagelement so zu formen, dass in der Offenstellung des Ventilelements dieses zusammen mit dem Anschlagelement einen Gasraum definiert, welcher durch das sich in seiner Offenstellung befindende Ventilelement und das Anschlagelement mindestens nahezu geschlossen wird.

Bei allen Ausführungsformen des erfindungsgemäßen Rückschlagventils mit einem federnd gehaltenen Anschlagelement ist es von Vorteil, wenn letzteres von mehrere Federelementen gehalten wird, welche am Umfang des Anschlagelements im Abstand voneinander angeordnet sind, damit das Anschlagelement, wenn das Ventilelement gegen das Anschlagelement anläuft, dieselbe Bewegung wie das Ventilelement durchführt, bis das Ventilelement seine Offenstellung erreicht hat. Deshalb empfiehlt es ich auch, die Rückstellfedern für das Ventilelement an dessen Umfang im Abstand voneinander anzuordnen.

Vor allem dann, wenn das Ventilelement und/oder das Anschlagelement plättchenförmig gestaltet ist beziehungsweise sind, empfiehlt es ich aus herstellungstechnischen Gründen, die Rückstellfedern und/oder die Federelemente als streifenartige Flachmaterial-Federn zu gestalten. Es ist dann möglich, das Ventilelement samt seinen Rückstellfedern beziehungsweise das Anschlagelement samt seinen Federelementen als einfaches Stanzteil herzustellen, insbesondere aus einem Federstahlblech und vorzugsweise aus einem Blech aus rostfreiem Federstahl.

Um die Abmessungen eines erfindungsgemäßen Rückschlagventils möglichst klein zu halten, wird empfohlen, die Rückstellfedern beziehungsweise die Federelemente so zu gestalten, dass jede der Rückstellfedern beziehungsweise jedes der Federelemente in Richtung der Ventilachse gesehen einen bogenförmigen Streifen bildet, dessen Krümmungsmittelpunkt ungefähr mit dem Zentrum des Ventilelements bzw. der Ventilachse zusammenfällt und dessen eines, erstes Ende das Ventilelement beziehungsweise das Anschlagelement trägt (so wie dies für ein Ventilelement aus der Figur 5 der DE-A-10 2005 020 482 bekannt ist); auf diese Weise lassen sich die bezüglich der Ventilachse radialen Abmessungen des betreffenden Teils besonders klein halten.

Bei solchen Ausführungsformen könnten die die Rückstellfedern beziehungsweise die Federelemente bildenden bogenförmigen Streifen in ihrer Länge so bemessen werden, dass sie sich nicht überlappen, so wie dies bei dem Ventilelement gemäß Figur 5 der DE-A-10 2005 020 482 der Fall ist. Hinsichtlich der Erzielung eines möglichst großen Hubs des Ventilelements und einer möglichst kleinen Biegebeanspruchung der Rückstellfedern beziehungsweise der Federelemente, vor allem in deren Endbereichen, ist es jedoch von Vorteil, die Länge der Rückstellfedern beziehungsweise der Federelemente möglichst groß zu machen, was ohne eine nennenswerte Vergrößerung der radialen Abmessungen dann möglich ist, wenn, in Richtung der Ventilachse gesehen, sich mindestens jeweils diejenigen beiden bogenförmigen Streifen zweier Rückstellfedern beziehungsweise zweier Federelement über einen Teil ihrer Länge überlappen, deren erste Enden einander benachbart am Umfang des Ventilelements beziehungsweise des Anschlagelements angeordnet sind, wobei bei besonders vorteilhaften Ausführungsformen jeder bogenförmige Streifen über einen ersten Teil seiner Länge von einem - von der Ventilachse aus gesehenen - radial weiter außen liegenden bogenförmigen Streifen überlappt wird und über einen anderen Teil seiner Länge einen weiter innen liegenden bogenförmigen Streifen überlappt.

Bei Ausführungsformen mit einander teilweise überlappenden Rückstellfedern beziehungsweise Federelementen ergibt sich eine besonders kompakte Bauform dann, wenn, in Richtung der Ventilachse gesehen, der bogenförmige Streifen einer Rückstellfeder beziehungsweise eines Federelements eine ungefähr einem Abschnitt einer Spirale entsprechende Gestalt aufweist und sich entlang des Streifens in Richtung auf das erste Streifenende der Ventilachse, das heißt dem Umfang des Ventilelements beziehungsweise des Anschlagelements, nähert.

Gleichfalls im Sinne der Erzielung einer möglichst kompakten Bauform wird schließlich vorgeschlagen, die Rückstellfedern beziehungsweise Federelemente so zu gestalten, dass, in Richtung der Ventilachse gesehen, jede Rückstellfeder beziehungsweise jedes Federelement zwischen ihren beziehungsweise seinen Enden in Richtung auf die Ventilachse an einer Stelle abgekröpft ist, welcher das zweite Ende der weiter außen liegenden Rückstellfeder beziehungsweise des weiter außen liegenden Federelements benachbart ist, wobei sich eine solche Abkröpfung bezüglich der Minimierung der Baugröße dann besonders stark auswirkt, wenn das erste Ende, das heißt der Übergang in das Ventilelement beziehungsweise das Anschlagelement, der weiter innen liegenden Rückstellfeder beziehungsweise des weiter innen liegenden Federelements der Abkröpfung benachbart ist.

Bei besonders bevorzugten Ausführungsformen des erfindungsgemäßen Rückschlagventils ist sowohl das Ventilelement, als auch das Anschlagelement ungefähr kreisscheibenförmig gestalten, und zwar insbesondere so, dass in Richtung der Ventilachse gesehen das Anschlagelement und das Ventilelement deckungsgleich übereinander liegen. Das Anschlagelement kann aber auch kreisringförmig gestaltet sein.

Nur der Vollständigkeit halber sei noch darauf hingewiesen, dass, in Richtung der Ventilachse gesehen, die Rückstellfedern beziehungsweise die Federelemente auch eine andere Gestalt haben könnten als eine ungefähr einem Kreisbogen entsprechende Gestalt; so könnte jede Rückstellfeder beziehungsweise jedes Federelement, in Richtung der Ventilachse gesehen, zum Beispiel einen haarnadelförmigen Abschnitt oder zwei haarnadelförmige Abschnitte aufweisen und so einem flachgedrückten U oder einem flachgedrückten S gleichen, so wie dies in der deutschen Patentanmeldung Nr. 10 2007 010 162.9 offenbart wurde.

Allen diesen Ausführungsformen mit von Flachmaterial-Streifen gebildeten Rückstellfedern beziehungsweise Federelementen ist der Vorteil gemeinsam, dass die Rückstellfedern beziehungsweise die Federelemente aufgrund der verhältnismäßig großen Länge der Flachmaterial-Federn eine verhältnismäßig kleine Federkonstante haben, sodass für das Öffnen des Rückschlagventils nur ein verhältnismäßig kleiner Druckunterschied zwischen der Anströmseite und der Abströmseite des Ventilelements erforderlich ist, das Ventilelement verhältnismäßig sanft abgebremst wird, wenn es sich seiner Offenstellung nähert, und bei geöffnetem Rückschlagventil dem Abgasstrom ein verhältnismäßig großer Durchströmquerschnitt zur Verfügung steht.

Besonders einfach aufgebaut und besonders kostengünstig herstellbar sind solche Ausführungsformen des erfindungsgemäßen Rückschlagventils, welche eine mit der Abgas-Durchlassöffnung sowie dem Ventilsitz versehene Grundplatte, eine mit dem Ventilelement und den Rückstellfedern versehene Ventilelementplatte und eine mit dem Anschlagelement und den Federelementen versehene Anschlagelementplatte aufweisen. Ein solches Rückschlagventil ist in Richtung der Ventilachse besonders kompakt, außerdem lässt sich eine der Platten oder lassen sich mehrere oder gar alle dieser Platten durch einfache Stanzvorgänge aus Metallblechen herstellen. In diesem Zusammenhang sei aber darauf hingewiesen, dass sich auch andere geeignete temperaturbeständige Materialien verwenden lassen, zum Beispiel temperaturbeständige Kunststoffe, bevorzugt werden jedoch Edelstahlbleche beziehungsweise für die mit dem Ventilelement und dem Anschlagelement versehenen Platten rostfreie Federstahlbleche.

Im Hinblick auf die anzustrebende kleine Federkonstante der Rückstellfedern empfiehlt es sich, für die Ventilelementplatte ein Flachmaterial zu verwenden, dessen Dicke nur einen Bruchteil der Dicke des für die Herstellung der Grundplatte verwendeten Flachmaterials beträgt. Für die Ventilelementplatte verwendet man vorzugsweise ein Federstahlblech mit einer Dicke von insbesondere lediglich 0,1 bis 0,5 mm, wobei eine Dicke von ca. 0,2 bis 0,3 mm besonders vorteilhaft ist. Das Material der Anschlagelementplatte hat jedoch vorzugsweise eine größere Dicke als das für die Ventilelementplatte verwendete Material.

Damit bei einem erfindungsgemäßen Abgas-Rückschlagventil nicht nur ein "Überschwingen" der das Ventilelement haltenden Rückstellfedern verhindert wird, wenn das Ventilelement beim Öffnen des Rückschlagventils zu einem kurzzeitigen Stillstand kommt, sondern in dieser Phase auch ein "Überschwingen" der das Anschlagelement haltenden Federelemente nicht stattfinden kann, ist bei besonders vorteilhaften Ausführungsformen des erfindungsgemäßen Abgas-Rückschlagventils die Federkonstante der das Anschlagelement haltenden Federelemente wesentlich größer als die Federkonstante der das Ventilelement haltenden Rückstellfedern, wobei Dimensionierungen empfohlen werden, die zur Folge haben, dass die Federkonstante der Federelemente mindestens doppelt so groß ist wie die Federkonstante der Rückstellfedern.

Nachzutragen ist noch, dass an die Stelle eines Stanzvorgangs für die Herstellung einer oder mehrerer der vorstehend erwähnten Platten auch andere Schneidvorgänge treten können, zum Beispiel das Laserschneiden oder die Bearbeitung mittels einer Draht-Funkenerosionsmaschine.

Mehrere oder alle der vorstehend erwähnten Platten können einfach und kostengünstig durch Punktschweißen miteinander verbunden werden.

Das erfindungsgemäße Rückschlagventil lässt sich in ein flach bauendes Gehäuse integrieren, aber auch nach Art einer Flachdichtung zwischen zwei Rohrflansche einer Abgasrückführleitung einbauen.

Damit das erfindungsgemäße Rückschlagventil in geöffnetem Zustand einen möglichst großen Öffnungsquerschnitt freigibt und für den Abgasstrom einen möglichst geringen Strömungswiderstand bildet, sind bei bevorzugten Ausführungsformen des erfindungsgemäßen Rückschlagventils - in Richtung der Ventilachse gesehen- die Federelemente und die Rückstellfedern mindestens ungefähr identisch gestaltet und mindestens ungefähr deckungsgleich übereinander angeordnet. Eine solche Gestaltung des Rückschlagventils führt aber noch zu einem weiteren Vorteil: Wenn sich das Ventilelement in seine Offenstellung bewegt und sein Hub in dieser Offenstellung begrenzt wird, können (müssen aber nicht unbedingt) das Ventilelement und das Anschlagelement gegeneinander anliegen; der Hub kann aber auch dadurch begrenzt werden, dass die das Ventilelement haltenden Rückstellfedern gegen die das Anschlagelement haltenden Federelemente anliegen; außerdem begrenzen dann die das Anschlagelement tragenden Federelemente auch die Auslenkung der das Ventilelement tragenden Rückstellfedern, wobei in diesem Zusammenhang zu bemerken ist, dass die das Anschlagelement tragenden Federelemente eine wesentlich größere Federkonstante haben können als die das Ventilelement tragenden Rückstellfedern, nämlich dann, wenn das Ventilelement im Zuge des Öffnens des Rückschlagventils einen Teil seines Hubs zurücklegen kann, ehe das Ventilelement das Anschlagelement berührt und/oder die Rückstellfedern des Ventilelements die Federelemente des Anschlagelements berühren - bei bevorzugten Ausführungsformen des erfindungsgemäßen Rückschlagventils berührt das Ventilelement erst kurz vor seiner Offenstellung das Anschlagelement, und entsprechendes gilt für die Rückstellfedern und die Federelemente.

In diesem Zusammenhang sei der Vollständigkeit halber noch darauf hingewiesen, dass bei Ausführungsformen des erfindungsgemäßen Rückschlagventils, welche eine den Ventilsitz bildende Grundplatte oder ein anderes Bauelement aufweisen, welches sich vom Ventilsitz bezüglich der Ventilachse in radialer Richtung nach außen erstreckt, die Grundplatte beziehungsweise dieses Bauelement ein Überschwingen der das Ventilelement haltenden Rückstellfedern verhindert, wenn im Zuge des Schließens des Rückschlagventils das Ventilelement gegen den Ventilsitz anläuft.

Bei Ausführungsformen des erfindungsgemäßen Rückschlagventils mit einem der Dämpfung der Ventilelement-Bewegung dienenden Gasraum kann es vorteilhaft sein, für eine definierte Dämpfung der Bewegung des Ventilelements in seine durch das Anschlagelement definierte Offenstellung das Anschlagelement und/oder das Ventilelement mit einer kleinen Gasdurchlassöffnung zu versehen, durch deren Größe sich der Dämpfungseffekt vorbestimmen lässt.

Für mit einem der Dämpfung der Ventilelementbewegung dienenden Gasraum versehene erfindungsgemäße Rückschlagventile wird auch empfohlen, diese so zu gestalten, dass zur Bildung des Gasraumes das Anschlagelement und/oder das Ventilelement mindestens eine vom jeweils anderen Element wegweisende Auswölbung aufweist, damit der Gasraum ein nennenswertes Volumen erhält und das der Bewegungsdämpfung dienende Gas beim Annähren des Ventilelements an das Anschlagelement zunächst bis zu einem gewissen Grad zwischen dem Ventilelement und dem Anschlagelement "gefangen" wird.

Bei einem Hubkolben-Verbrennungsmotor gibt es Betriebszustände, für die es günstig ist, die Abgasrückführung völlig zu unterbinden oder zumindest stark zu reduzieren (zum Beispiel bei einer raschen Steigerung der Motorleistung zum Zwecke eines starken Beschleunigens eines Fahrzeugs), auch wenn der Gasdruck auf der Anströmseite des Ventils größer als auf dessen Abströmseite ist. Für diesen Fall wird empfohlen, das erfindungsgemäße Rückschlagventil so auszubilden, dass zum Schließen des Rückschlagventils das Anschlagelement mittels eines Betätigungselements in Richtung der Ventilachse derart dem Ventilsitz annäherbar ist, dass die Abgas-Durchlassöffnung durch das Ventilelement zumindest nahezu gasdicht verschlossen wird.

Aus dem Vorstehenden ergibt sich, dass bei einem erfindungsgemäßen Rückschlagventil durch entsprechende Gestaltung und Anbringung der das Ventilelement tragenden Rückstellfedern erreicht werden kann, dass das Rückschlagventil nicht schon bei einem ganz geringen Überdruck auf seiner Anströmseite öffnet, jedoch lässt sich durch die Gestaltung und Bemessung der Rückstellfedern deren Federkonstante ohne Weiteres so vorbestimmen, dass das Rückschlagventil bei einem vorgegebenen Überdruck auf seiner Anströmseite öffnet.

Schließlich sei noch darauf hingewiesen, dass bei einem erfindungsgemäßen Rückschlagventil mit einem federnd gehaltenen Anschlagelement die genaue Offenstellung des Ventilelements und damit die genaue Größe des Hubs des Ventilelements von der Federkonstante der das Anschlagelement haltenden Federelemente sowie von der auf das Rückschlagventil einwirkenden Druckdifferenz beziehungsweise von der Strömungsgeschwindigkeit des das Rückschlagventil anströmenden Abgases abhängig ist, jedoch kann die Schwankungsbreite des Ventilelementhubs im Allgemeinen vernachlässigt werden.

Weiter Merkmale, Vorteile und Einzelheiten der Erfindung ergeben sich aus der nachfolgenden Beschreibung sowie der beigefügten zeichnerischen Darstellung zweier bevorzugter Ausführungsformen des erfindungsgemäßen Rückschlagventils; in der Zeichnung zeigen:
- Fig. 1: eine isometrische Ansicht der ersten Ausführungsform des erfin- dungsgemäßen Rückschlagventils;
- Fig. 2: eine Draufsicht auf die erste Ausführungsform (gemäß Figur 1 von oben gesehen);
- Fig. 3: einen Schnitt nach der Linie 3-3 in Figur 2, welcher das Rückschlagventil in geschlossenem Zustand zeigt;
- Fig. 4A: eine Draufsicht auf die mit dem Ventilsitz versehene Grundplatte der ersten Ausführungsform des erfindungsgemäßen Rückschlag- ventils;
- Fig. 4B: einen Schnitt nach der Linie 4B-4B in Figur 4A;
- Fig. 5A: eine Draufsicht auf die mit dem Ventilelement versehene Ventilelementplatte der ersten Ausführungsform;
- Fig. 5B: einen Schnitt nach der Line 5B-5B in Figur 5A;
- Fig. 6A: eine Draufsicht auf die mit dem Anschlagelement versehene An- schlagelementplatte, der ersten Ausführungsform;
- Fig. 6B: einen Schnitt nach der Linie 6B-6B in Figur 6A;
- Fig. 7: wiederum einen Schnitt nach der Linie 3-3 in Figur 2, jedoch bei vollständig geöffnetem Rückschlagventil, und
- Fig. 8: eine isometrische Ansicht der zweiten Ausführungsform des erfin- dungsgemäßen Rückschlagventils.

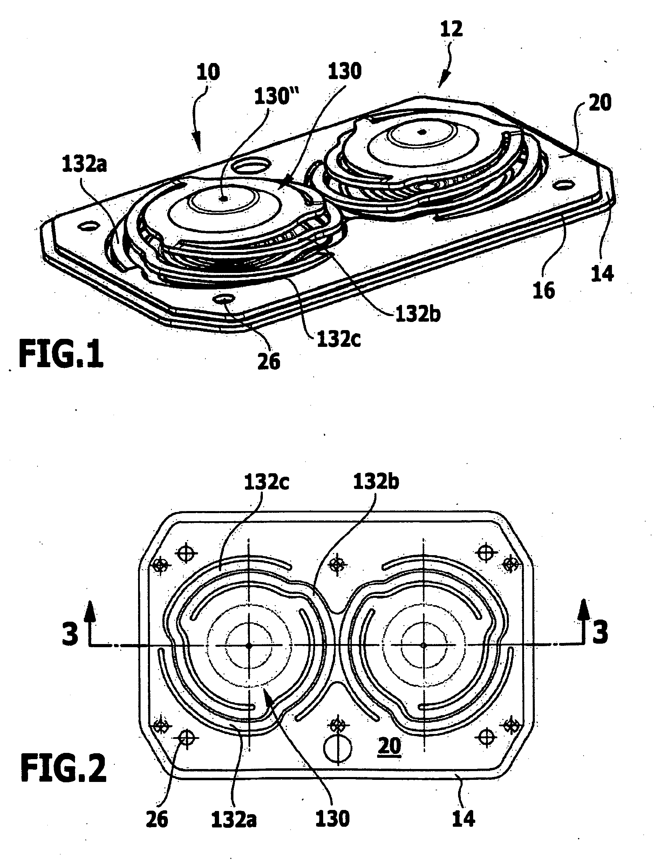

Wie die Figuren 1 und 3 erkennen lassen, weist diese Ausführungsform zwei nebeneinander angeordnete erfindungsgemäße Rückschlagventile 10 und 12 auf, welche identisch gestaltet sind und von drei aufeinander angeordneten und miteinander verbundenen metallischen Platten gebildet werden, nämlich einer Grundplatte 14, einer Ventilelementplatte 16 und einer Anschlagelementplatte 20. Zunächst sollen diese drei Platten anhand der Figuren 4A bis 6B beschrieben werden, wobei der Einfachheit halber nur diejenigen Elemente erwähnt und erörtert werden sollen, die zu einem der beiden identisch gestalteten Rückschlagventile 10, 12 gehören, nämlich zum Rückschlagventil 10.

Die in den Figuren 4A und 4B dargestellte Grundplatte 14 hat für das Rückschlagventil 10 eine kreisförmige Abgas-Durchlassöffnung 22, deren Umfangsrandbereich einen Ventilsitz 24 bildet. Außerdem hat die Grundplatte 14 (ebenso wie die beiden anderen, noch zu erörternden Platten) Löcher 26 zum Verbinden der Platten des Rückschlagventils miteinander und/oder für den Durchtritt von Montageschrauben, mit denen die die beiden Rückschlagventile 10, 12 umfassende Einheit zwischen Flanschen zum Beispiel eines Ventilgehäuses oder von Abgas-Rohrleitungsabschnitten eingespannt werden kann.

Wie die Figuren 5A und 5b erkennen lassen, hat die Ventilelementplatte 16 für das Rückschlagventil 10 einen in einer Draufsicht auf die Ventilelementplatte 16 kreisscheibenförmigen Bereich, welcher ein Ventilelement 30 bildet. Das Zentrum des Ventilelements 30 liegt ebenso wie das Zentrum der Abgas-Durchlassöffnung 22 auf einer Ventilachse 10a (siehe Figur 3) des Rückschlagventils 10, wobei diese Ventilachse senkrecht zu der insbesondere von der Grundplatte 14 definierten Ebene verläuft. Wie am besten die Figur 5A erkennen lässt, sind drei Rückstellfedern 32a, 32b und 32c integrale Bestandteile der Ventilelementplatte 16 und gehen mit ersten Enden 32a', 32b' und 32c' in das Ventilelement 30 über, welches somit gleichfalls integraler Bestandteil der Ventilelementplatte 60 ist.

Das Ventilelement 30 ist topfförmig gestaltet, wie besonders deutlich die Figur 3 zeigt, und zwar so, dass eine vom Ventilelement 30 gebildete Auswölbung 30' mit ihrer konvexen Seite bei geschlossenem Rückschlagventil in die Abgas-Durchlassöffnung 22 eingreift, während die konkave Seite der Auswölbung 30' der Anschlagelementplatte 20 zugekehrt ist. Bevorzugt werden Ausführungsformen, bei denen der Außendurchmesser der Auswölbung 30' höchstens gleich groß ist wie der Durchmesser der Abgas-Durchlassöffnung 22. Bei der dargestellten Ausführungsform wurde die Auswölbung 30' dadurch gebildet, dass das die Ventilelemente 16 bildende Blech entlang in Figur 5A erkennbaren Kreisringen abgekröpft ist, sodass sich in der Draufsicht auf das Ventilelement 30 kreisringförmige Stufen ergeben.

Die ersten Ende 32a', 32b' und 32c' der Rückstellfedern sind in gleichen Umfangswinkelabständen voneinander am Umfang des Ventilelements 30 angeordnet, und die zweiten Enden 32a", 32b" und 32c" der Rückstellfedern, an denen die letzteren in die eigentliche Ventilelementplatte 16 übergehen, sind gleichfalls in gleichen Umfangswinkelabständen voneinander angeordnet. Erfindungsgemäß sind alle drei Rückstellfedern 32a, 32b, und 32c identisch gestaltet, und jede Rückstellfeder weist ungefähr in der Mitte ihrer Länge (in Umfangsrichtung des Ventilelements 30 gemessen) eine Abkröpfung 36 (in einer Draufsicht auf die Ventilelementplatte 16) auf, zu deren beiden Seiten die betreffende Rückstellfeder eine kreisbogenförmige Gestalt hat, wobei jeder Kreisbogen konzentrisch zur Ventilachse 10a verläuft. Bei jeder Rückstellfeder 32a beziehungsweise 32b beziehungsweise 32c wird der zwischen der Abkröpfung 36 und dem ersten Ende der betreffenden Rückstellfeder liegende innere Federabschnitt, welcher dem Ventilelement 30 näher liegt als der andere, zwischen der Abkröpfung 36 und dem zweiten Ende 32a" beziehungsweise 32b" beziehungsweise 32c" der Rückstellfeder liegende äußere Federabschnitt, von einem äußeren Federabschnitt einer der beiden anderen Rückstellfedern überlappt, während der äußere Federabschnitt der betrachteten Rückstellfeder einen inneren Federabschnitt einer zweiten der beiden anderen Rückstellfedern überlappt. Ferner sind erfindungsgemäß die ersten Enden 32a', 32b' und 32c' der Rückstellfedern den Abkröpfungen 36 ebenso unmittelbar benachbart wie die zweiten Enden 32a", 32b", und 32c". Auf diese Weise, insbesondere aufgrund des Umstands, dass die Rückstellfedern erfindungsgemäß ineinander verschachtelt sind, ergibt sich eine bezüglich der Ventilachse 10a in radialer Richtung besonders kompakte Bauweise des erfindungsgemäßen Rückschlagventils bei dennoch verhältnismäßig großer Länge der Rückstellfedern.

Wie die Figur 3 zeigt, liegen bei geschlossenem Rückschlagventil alle Rückstellfedern 32a, 32b, und 32c erfindungsgemäß zumindest nahezu vollständig auf der Grundplatte 14 auf, sodass sie nicht überschwingen können, wenn das Rückschlagventil geschlossen wird, indem sich das Ventilelement 30 gemäß Figur 3 von oben gegen die Grundplatte 14 bewegt, bis ein Umfangsrandbereich des Ventilelements 30 abdichtend auf dem kreisringförmigen Ventilsitz 24 der Grundplatte 14 aufliegt.

Wie ein Vergleich der Figuren 5A und 6A sowie die Figuren 3 und 6B zeigen, ist, sieht man von der unterschiedlichen Dicke der für die beiden Platten verwendeten Flachmaterialien ab, die Anschlagelementplatte 20 in einer Draufsicht in Richtung der Ventilachse 10a gesehen genauso gestaltet wie die Ventilelementplatte 16, zumindest im Bereich ihres Anschlagelements und ihrer dieses haltenden Federelemente. In Folge dessen kann die Beschreibung der Gestaltung der Anschlagelementplatte 20 verhältnismäßig kurz gefasst werden, und zur Verdeutlichung der Übereinstimmungen wurden für die Elemente der Anschlagelementplatte 20 dieselben Bezugszeichen wie für die Elemente der Ventilelementplatte 16 verwendet, jedoch unter Erhöhung um 100.

Ein in einer Draufsicht auf die Anschlagelementplatte 20 ungefähr kreisscheibenförmig gestaltetes Anschlagelement 130 wird von drei Federelementen 132a, 132b und 132c gehalten, welche in der Draufsicht auf die Anschlagelementplatte 20 genauso gestaltet und angeordnet sind wie die Rückstellfedern 32a, 32b, und 32c der Ventilelementplatte 16 in einer Draufsicht auf die letztere. Für die Anschlagelementplatte 20 wurde jedoch erfindungsgemäß ein Federstahlblech größerer Dicke verwendet als für die Ventilelementplatte 16. Ferner ist bei der dargestellten erfindungsgemäßen Ausführungsform das Anschlagelement 130 in einer Draufsicht auf die Anschlagelementplatte 20 genauso gestaltet wie das Ventilelement 30 in einer Draufsicht auf die Ventilelementplatte 16.

Erfindungsgemäß liegen in einer Draufsicht auf das Rückschlagventil 10 die Rückstellfedern 32a, 32b und 32c und die Federelemente 132a, 132b und 132c ebenso zumindest ungefähr deckungsgleich übereinander wie das Anschlagelement 130 und das Ventilelement 30 (siehe insbesondere Figur 2).

Gemäß der Erfindung ist auch das Anschlagelement 130 mit einer Auswölbung 130' versehen, welche jedoch, anders als die Auswölbung 30' des Ventilelements 30, nach oben und nicht nach unten ausgewölbt ist; jedoch ist, wie die Figur 7 erkennen lässt, der Durchmesser der Auswölbung 130' zumindest annährend gleich groß wie der Durchmesser der Auswölbung 30' des Ventilelements 30.

Erfindungsgemäß liegt jedoch schon im kräftefreien Zustand des Rückschlagventils 10 das Anschlagelement 130 oberhalb derjenigen Ebene, welche von der Anschlagplatte 20 außerhalb der Federelemente 132a, 132b und 132c definiert wird (siehe Figur 3), und schon im kräftefreien Zustand verlaufen die das Anschlagelement 130 tragenden Federelemente aus dieser Ebene heraus nach oben wie Abschnitte einer Wendel.

In dem in Figur 7 dargestellten voll geöffneten Zustand des Rückschlagventils 10, in welchem das Ventilelement 30 mit einem Umfangsrandbereich gegen einen Umfangsrandbereich des Anschlagelements 130 anliegt, bilden das Ventilelement 30 und das Anschlagelement 130 in Folge ihrer Auswölbungen 30' beziehungsweise 130' zwischen sich einen Gasraum 60, dessen Gasinhalt als "Stoßdämpfer" wirkt, wenn das Ventilelement 30 auf das Anschlagelement 130 aufläuft, das unmittelbar vor dem Auflaufen zwischen den beiden Elementen vorhandene Gasvolumen radial nach außen teilweise verdrängt werden muss und die gegeneinander anliegenden Umfangsrandbereiche des Ventilelements 30 und des Anschlagelements 130 den Gasraum 60 schließlich zumindest nahezu gasdicht abschließen.

Erfindungsgemäß kann der Grad der Dämpfung dadurch vorbestimmt werden, dass das Anschlagelement 130 (und/oder das Ventilelement 30) radial innerhalb seines Umfangsrandbereichs mit einer kleinen Gasdurchlassöffnung 130"versehen wird, deren Öffnungsquerschnitt vorgewählt werden kann - eine maximale Dämpfung ergibt sich natürlich ohne eine Gasdurchlassöffnung 130".

Wie die Figur 7 erkennen lässt, liegen bei vollständig geöffnetem Rückschlagventil nicht nur die Umfangsrandbereiche des Ventilelements 30 und des Anschlagelements 130 gegeneinander an, sondern es liegen auch die das Ventilelement 30 haltenden Rückstellfedern gegen die das Anschlagelement 130 haltenden Federelement an, und da die Federkonstante dieser Federelemente größer ist als die Federkonstante der Rückstellfedern, können die letzteren beim Öffnen des Rückschlagventils nicht überschwingen und dadurch überbeansprucht werden.

In die Figur 3 wurde ein durch einen Pfeil repräsentiertes Betätigungselement 62 eingezeichnet, welches als z.B. als gesteuert drehbarer Exzenter gestaltet sein und mit einer solchen nach unten gerichteten Kraft auf das Anschlagelement 130 gepresst werden kann, dass durch den Umfangsrandbereich des Anschlagelements 130 das Ventilelement 30 auch dann nach unten gegen den Ventilsitz 24 gepresst wird, wenn auf der gemäß der Zeichnung unteren Seite des Ventilelements 30 ein höhere Gasdruck herrscht als auf dessen Oberseite. Mit Hilfe eines solchen Betätigungselements 62 lässt sich also ein erfindungsgemäßes Rückschlagventil problemlos vollständig oder teilweise schließen, und zwar unabhängig von der am Ventilelement 30 anliegenden Druckdifferenz.

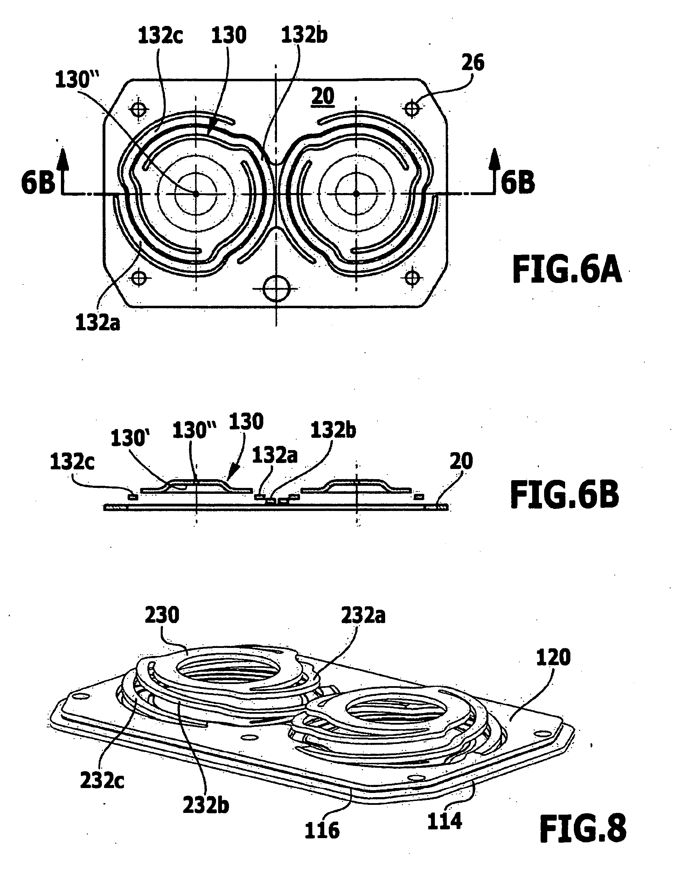

Die Figur 8 zeigt schließlich noch eine zweite Ausführungsform des erfindungsgemäßen Rückschlagventils, welche sich nur hinsichtlich der Gestaltung des Anschlagelements von der ersten Ausführungsform unterscheidet, weshalb in Figur 8 dieselben Bezugszeichen wie in den Figuren 1 bis 7 verwendet wurde, jedoch unter Erhöhung um 100.

Wie die Figur 8 deutlich zeigt, hat bei dieser zweiten Ausführungsform das Anschlagelement 230 nicht die Gestalt eines insbesondere kreisrunden Plättchens, das heißt das Anschlagelement 230 bildet keinen geschlossenen "Deckel" über dem Ventilelement 30. Vielmehr hat bei dieser zweiten Ausführungsform das Anschlagelement 130 die Gestalt eines Kreisrings zum Zwecke der Abstützung des Umfangsrandbereichs des Ventilelements 30, wenn sich dieses in seiner oberen Endstellung befindet. Es sei aber bemerkt, dass es hinsichtlich der Gestaltung des Anschlagelements 230 nur darauf ankommt, dass der Umfangsrandbereich des Ventilelements 30 ringsum hinreichend abgestützt wird.

Wie die Figur 3 zeigt, erheben sich bei bevorzugten Ausführungsformen des erfindungsgemäßen Rückschlagventils die das Anschlagelement haltenden Federelemente schon bei geschlossenem Rückschlagventil über die Anschlagelementplatte, das heißt diese Federelemente sind vorverformt, um einen Abstand zwischen dem Anschlagelement und dem Ventilelement zu schaffen.

Wie sich aus den Zeichnungen und/oder der vorstehenden Beschreibung ergibt, zeichnen sich bevorzugte Ausführungsformen des erfindungsgemäßen Abgas-Rückschlagventils durch eines oder mehrere der folgenden Merkmale aus:
Das Anschlagelement wird von mehreren Federelementen gehalten, welche am Umfang des Anschlagelements im Abstand voneinander angeordnet sind.

Das Ventilelement bzw. das Anschlagelement wird von drei Rückstellfedern bzw. Federelementen gehalten, von denen jede bzw. jedes über ungefähr eine Hälfte ihrer bzw. seiner Länge eine bezüglich der Ventilachse radial weiter innen liegende Rückstellfeder bzw. Federelement überlappt und ungefähr über die andere Hälfte der Länge von einer weiter außen liegenden Rückstellfeder bzw. Federelement überlappt wird.

In Richtung der Ventilachse gesehen ist jede Rückstellfeder bzw. jedes Federelement zwischen den Federenden in Richtung auf die Ventilachse an einer Stelle abgekröpft, welcher das zweite Ende der weiter außen liegenden Feder (Rückstellfeder bzw. Federelement) benachbart ist.

Das erste Ende der weiter innen liegenden Rückstellfeder bzw. des weiter innen liegenden Federelements ist der Abkröpfung benachbart.

In Richtung der Ventilachse gesehen ist das Ventilelement bzw. Anschlagelement ungefähr kreisscheibenförmig gestaltet.

In Richtung der Ventilachse gesehen weist jeder der bogenförmigen Federstreifen ungefähr kreisbogenförmige Abschnitte auf.

Bei einem Rückschlagventil mit Grundplatte, Ventilelementplatte und Anschlagelementplatte ist die Materialdicke der Ventilelementplatte wesentlich geringer als die Materialdicke der Grundplatte.

Bei einem wie vorstehend zusammengesetzten Rückschlagventil handelt es sich bei mindestens einer der Platten um ein Stanzteil.

Bei einem wie vorstehend beschrieben zusammengesetzten Rückschlagventil bestehen die Platten aus rostfreiem Stahl.

Schließlich weist eine bevorzugte Ausführungsform des erfindungsgemäßen Rückschlagventils ein Betätigungselement auf, mit dem sich zum Schließen des Ventils das Anschlagelement in Richtung der Ventilachse derart dem Ventilsitz annähern lässt, dass die Abgas-Durchlassöffnung durch das Ventilelement zumindest nahezu gasdicht verschlossen wird.

## Patentansprüche

1. Abgas-Rückschlagventil (10) für eine von einer Abgasseite zu einer Frischluftseite eines Hubkolben-Verbrennungsmotors führende Abgasrückführleitung, welches ein bewegliches, von mehreren Rückstellfedern (32a, 32b, 32c) gehaltenes Flachmaterial-Ventilelement (30) sowie einen Ventilsitz (24) mit einer vom Ventilelement in einer Ventilelement-Schließstellung zumindest nahezu verschließbaren, eine Ventilachse (10a) des Rückschlagventils definierenden Abgas-Durchlassöffnung aufweist, wobei das Ventilelement durch einen die Abgas-Durchlassöffnung (22) in Richtung auf das Ventilelement anströmenden Abgasstrom entgegen der Wirkung der Rückstellfedern in Richtung der Ventilachse vom Ventilsitz wegbewegbar ist und die Rückstellfedern am Umfang des Ventilelements im Abstand voneinander angeordnet sind, **dadurch gekennzeichnet, dass** das Rückschlagventil (10) auf der vom Ventilsitz (24) abgewandten Seite des Ventilelements mindestens ein den Hub des Ventilelements bis in eine Offenstellung des Ventilelements (30) begrenzendes Anschlagelement (130) aufweist, welches von mindestens einem Federelement (132a, 132b, 132c) in Richtung der Ventilachse (10a) beweglich gehalten ist.

2. Rückschlagventil nach Anspruch 1, **dadurch gekennzeichnet, dass** in Richtung der Ventilachse (10a) gesehen sowohl das Ventilelement (30), als auch das Anschlagelement (130) plättchenförmig gestaltet ist, und dass das Ventilelement und das Anschlagelement so geformt sind, dass in der Offenstellung des Ventilelements dieses zusammen mit dem Anschlagelement einen Gasraum (60) definiert, welcher durch das sich in seiner Offenstellung befindliche Ventilelement und das Anschlagelement mindestens nahezu geschlossen ist.

3. Abgas-Rückschlagventil (10) für eine von einer Abgasseite zu einer Frischluftseite eines Hubkolben-Verbrennungsmotors führende Abgasrückführleitung, welches ein bewegliches, von mehreren Rückstellfedern (32a, 32b, 32c) gehaltenes Flachmaterial-Ventilelement (30) sowie einen Ventilsitz (24) mit einer vom Ventilelement in einer Ventilelement-Schließstellung zumindest nahezu verschließbaren, eine Ventilachse (10a) des Rückschlagventils definierenden Abgas-Durchlassöffnung (22) aufweist, wobei das Ventilelement durch einen die Abgas-Durchlassöffnung in Richtung auf das Ventilelement anströmenden Abgasstrom entgegen der Wirkung der Rückstellfedern in Richtung der Ventilachse vom Ventilsitz wegbewegbar ist und die Rückstellfedern am Umfang des Ventilelements im Abstand voneinander angeordnet sind, **dadurch gekennzeichnet, dass** das Rückschlagventil (10) auf der vom Ventilsitz (24) abgewandten Seite des Ventilelements (30) mindestens ein den Hub des Ventilelements bis in eine Offenstellung des Ventilelements begrenzendes Anschlagelement (130) aufweist, und dass in Richtung der Ventilachse (10a) gesehen sowohl das Ventilelement (30) als auch das Anschlagelement (130) plättchenförmig gestaltet ist und das Ventilelement und das Anschlagelement so geformt sind, dass in der Offenstellung des Ventilelements dieses zusammen mit dem Anschlagelement einen Gasraum (60) definiert, welcher durch das sich in seiner Offenstellung befindliche Ventilelement und das Anschlagelement mindestens nahezu geschlossen ist.

4. Rückschlagventil nach Anspruch 3, **dadurch gekennzeichnet, dass** das Anschlagelement (130) von mindestens einem Federelement (132a, 132b, 132c) in Richtung der Ventilachse (10a) beweglich gehalten ist.

5. Rückschlagventil nach Anspruch 1 oder 4, **dadurch gekennzeichnet, dass** jede der Rückstellfedern (32a, 32b, 32c) und/oder jedes der Federelemente (132a, 132b, 132c) eine streifenartige Flachmaterial-Feder ist.

6. Rückschlagventil nach Anspruch 1 oder 3, **dadurch gekennzeichnet, dass**, in Richtung der Ventilachse gesehen, jede der Rückstellfedern (32a, 32b, 32c) und/oder jedes der Federelemente (132a, 132b, 132c) einen bogenförmigen Streifen bildet, dessen eines, erstes Ende (32a', 32b', 32c') das Ventilelement (30) bzw. das Anschlagelement (130) trägt.

7. Rückschlagventil nach Anspruch 6, **dadurch gekennzeichnet, dass**, in Richtung der Ventilachse (10a) gesehen, der bogenförmige Streifen eine ungefähr einem Abschnitt einer Spirale entsprechende Gestalt aufweist und sich entlang des Streifens in Richtung auf das erste Streifenende der Ventilachse (10a) nähert.

8. Rückschlagventil nach Anspruch 6 oder 7, **dadurch gekennzeichnet, dass**, in Richtung der Ventilachse (10a) gesehen, sich mindestens jeweils diejenigen beiden bogenförmigen Streifen über einen Teil ihrer Länge überlappen, deren erste Enden einander benachbart angeordnet sind.

9. Rückschlagventil nach Anspruch 8, **dadurch gekennzeichnet, dass** jeder bogenförmige Streifen über einen ersten Teil seiner Länge von einem, von der Ventilachse (10a) aus gesehen, radial weiter außen liegenden bogenförmigen Streifen überlappt wird und über einen anderen Teil seiner Länge einen weiter innen liegenden bogenförmigen Streifen überlappt.

10. Rückschlagventil nach einem der vorstehenden Ansprüche, **gekennzeichnet durch** eine mit der Abgas-Durchlassöffnung (22) sowie dem Ventilsitz (24) versehene Grundplatte (14), eine mit dem Ventilelement (30) und den Rückstellfedern (32a, 32b, 32c) versehende Ventilelementplatte (16), und eine mit dem Anschlagelement (130) und den Federelementen (132a, 132b, 132c) versehene Anschlagelementplatte (20).

11. Rückschlagventil nach Anspruch 10, **dadurch gekennzeichnet, dass** die Ventilelementplatte (16) und/oder die Anschlagelementplatte (20) aus Federstahlblech besteht.

12. Rückschlagventil nach Anspruch 1 oder 4, **dadurch gekennzeichnet, dass** das Anschlagelement (130) von mehreren Federelementen (132a, 132b, 132c) gehalten ist, welche am Umfang des Aschlagelements im Abstand voneinander angeordnet sind, und dass, in Richtung der Ventilachse (10a) gesehen, die Federelemente (132a, 132b, 132c) und die Rückstellfedern (32a, 32b, 32c) mindestens ungefähr identisch gestaltet und mindestens ungefähr deckungsgleich übereinander angeordnet sind.

13. Rückschlagventil nach Anspruch 2 oder 3, **dadurch gekennzeichnet, dass** für eine definierte Dämpfung der Bewegung des Ventilelements (30) in seine durch das Anschlagelement (130) definierte Offenstellung das Anschlagelement und/oder das Ventilelement eine kleine Gasdurchlassöffnung (130") aufweist.

14. Rückschlagventil nach Anspruch 2 oder 3, **dadurch gekennzeichnet, dass** zur Bildung des Gasraumes (60) das Anschlagelement (130) und/oder das Ventilelement (30) mindestens eine vom jeweils anderen Element wegweisende Auswölbung (130', 30') aufweist.

15. Rückschlagventil nach Anspruch 1 oder 4, **dadurch gekennzeichnet, dass** die Federkonstante der das Anschlagelement (130) haltenden Federelemente (132a, 132b, 132c) wesentlich größer ist als die Federkonstante der das Ventilelement (30) haltenden Rückstellfedern (32a, 32b, 32c).

## Claims

1. Exhaust gas check valve (10) for an exhaust gas return line leading from an exhaust gas side to a fresh air side of an internal combustion reciprocating piston engine, which exhaust gas check valve comprises a movable valve element (30) made of flat material, which is held by a plurality of return springs (32a, 32b, 32c), and a valve seat (24) with an exhaust gas through-opening which defines a valve axis (10a) of the check valve and is at least almost closable by the valve element in a closed position of the valve element, the valve element being movable in the direction of the valve axis away from the valve seat against the action of the return springs by a flow of exhaust gas flowing against the exhaust gas through-opening (22) in the direction towards the valve element, and the return springs being arranged in spaced relation to one another at the circumference of the valve element, **characterized in that** the check valve (10) comprises on the side of the valve element that faces away from the valve seat (24) at least one stop element (130) which delimits the stroke of the valve element up to an open position of the valve element (30) and is held by at least one spring element (132a, 132b, 132c) for movement in the direction of the valve axis (10a).

2. Check valve in accordance with claim 1, **characterized in that** both the valve element (30) and the stop element (130), seen in the direction of the valve axis (10a), are of plate-shaped design, and **in that** the valve element and the stop element are of such shape that in its open position the valve element defines together with the stop element a gas space (60) which is at least almost closed by the valve element in its open position and the stop element.

3. Exhaust gas check valve (10) for an exhaust gas return line leading from an exhaust gas side to a fresh air side of an internal combustion reciprocating piston engine, which exhaust gas check valve comprises a movable valve element (30) made of flat material, which is held by a plurality of return springs (32a, 32b 32c), and a valve seat (24) with an exhaust gas through-opening (22) which defines a valve axis (10a) of the check valve and is at least almost closable by the valve element in a closed position of the valve element, the valve element being movable in the direction of the valve axis away from the valve seat against the action of the return springs by a flow of exhaust gas flowing against the exhaust gas through-opening in the direction towards the valve element, and the return springs being arranged in spaced relation to one another at the circumference of the valve element, **characterized in that** the check valve (10) comprises on the side of the valve element (30) that faces away from the valve seat (24) at least one stop element (130) which delimits the stroke of the valve element up to an open position of the valve element, and **in that** both the valve element (30) and the stop element (130), seen in the direction of the valve axis (10a), are of plate-shaped design, and the valve element and the stop element are of such shape that in its open position the valve element defines together with the stop element a gas space (60) which is at least almost closed by the valve element in its open position and the stop element.

4. Check valve in accordance with claim 3, **characterized in that** the stop element (130) is held for movement in the direction of the valve axis (10a) by at least one spring element (132a, 132b, 132c).

5. Check valve in accordance with claim 1 or 4, **characterized in that** each of the return springs (32a, 32b, 32c) and/or each of the spring elements (132a, 132b, 132c) is a strip-like spring made of flat material.

6. Check valve in accordance with claim 1 or 3, **characterized in that** each of the return springs (32a, 32b, 32c) and/or each of the spring elements (132a, 132b, 132c), seen in the direction of the valve axis, forms an arcuate strip, one, first end (32a', 32b', 32c') of which carries the valve element (30) or the stop element (130).

7. Check valve in accordance with claim 6, **characterized in that** the arcuate strip, seen in the direction of the valve axis (10a), has a shape corresponding approximately to a section of a spiral, and along the strip in the direction towards the first strip end the arcuate strip approaches the valve axis (10a).

8. Check valve in accordance with claim 6 or 7, **characterized in that**, in each case, at least those two arcuate strips, seen in the direction of the valve axis (10a), whose first ends are arranged in proximity to each other, overlap each other over a portion of their length.

9. Check valve in accordance with claim 8, **characterized in that** each arcuate strip is overlapped over a first portion of its length by a - seen from the valve axis (10a) - radially further outwardly lying arcuate strip and overlaps over another portion of its length a further inwardly lying arcuate strip.

10. Check valve in accordance with any one of the preceding claims, **characterized by** a base plate (14) provided with the exhaust gas through-opening (22) and the valve seat (24), a valve element plate (16) provided with the valve element (30) and the return springs (32a, 32b, 32c), and a stop element plate (20) provided with the stop element (130) and the spring elements (132a, 132b, 132c).

11. Check valve in accordance with claim 10, **characterized in that** the valve element plate (16) and/or the stop element plate (20) consists of sheet spring steel.

12. Check valve in accordance with claim 1 or 4, **characterized in that** the stop element (130) is held by a plurality of spring elements (132a, 132b, 132c) which are arranged in spaced relation to one another at the circumference of the stop element, and **in that** the spring elements (132a, 132b, 132c) and the return springs (32a, 32b, 32c), seen in the direction of the valve axis (10a), are of at least approximately identical design and are arranged at least approximately congruently over one another.

13. Check valve in accordance with claim 2 or 3, **characterized in that** the stop element and/or the valve element has a small gas through-opening (130") for a defined damping of the movement of the valve element (30) into its open position defined by the stop element (130).

14. Check valve in accordance with claim 2 or 3, **characterized in that** the stop element (130) and/or the valve element (30) has at least one arch (130', 30') facing away from the respective other element for formation of the gas space (60).

15. Check valve in accordance with claim 1 or 4, **characterized in that** the spring constant of the spring elements (132a, 132b, 132c) holding the stop element (130) is considerably larger than the spring constant of the return springs (32a, 32b, 32c) holding the valve element (30).

## Revendications

1. Soupape de retenue pour gaz d'échappement (10) pour une conduite de recyclage de gaz d'échappement menant d'un côté de gaz d'échappement à un côté d'air frais d'un moteur à combustion interne à piston alternatif qui présente un élément de soupape en matériau plat (30) mobile, maintenu par plusieurs ressorts de rappel (32a, 32b, 32c) ainsi qu'un siège de soupape (24) avec une ouverture de passage de gaz d'échappement définissant un axe (10a) de la soupape de retenue, pouvant être au moins presque fermé par l'élément de soupape dans une position fermée de l'élément de soupape, l'élément de soupape pouvant être déplacé du siège de soupape par un courant de gaz d'échappement soufflant de l'ouverture de passage de gaz d'échappement (22) en direction de l'élément de soupape contre l'action des ressorts de rappel en direction de l'axe de soupape et les ressorts de rappel étant disposés sur la périphérie de l'élément de soupape à distance les uns des autres, **caractérisée en ce que** la soupape de retenue (10) présente sur le côté éloigné du siège de soupape (24) de l'élément de soupape au moins un élément de butée (130) délimitant la course de l'élément de piston jusque dans une position ouverte de l'élément de soupape (30) qui est maintenu mobile par au moins un élément de ressort (132a, 132b, 132c) en direction de l'axe de soupape (10a).

2. Soupape de retenue selon la revendication 1, **caractérisée en ce que** vu en direction de l'axe de soupape (10a), l'élément de soupape (30) et l'élément de butée (130) sont conçus de manière lamellaire et **en ce que** l'élément de soupape et l'élément de butée sont formés de sorte que dans la position ouverte de l'élément de soupape, celui-ci définisse conjointement avec l'élément de butée une chambre à gaz (60) qui est au moins presque fermée par l'élément de soupape se trouvant dans sa position ouverte et l'élément de butée.

3. Soupape de retenue pour gaz d'échappement (10) pour une conduite de recyclage de gaz d'échappement menant d'un côté de gaz d'échappement à un côté d'air frais d'un moteur à combustion interne à piston alternatif, qui présente un élément de soupape en matériau plat (30) mobile, maintenu par plusieurs ressorts de rappel (32a, 32b, 32c) ainsi qu'un siège de soupape (24) avec une ouverture de passage de gaz d'échappement définissant un axe (10a) de la soupape de retenue, pouvant être au moins presque fermé par l'élément de soupape dans une position fermée d'élément de soupape, l'élément de soupape pouvant être déplacé du siège de soupape par un courant de gaz d'échappement soufflant de l'ouverture de passage de gaz d'échappement (22) en direction de l'élément de soupape contre l'action des ressorts de rappel en direction de l'axe de soupape et les ressorts de rappel étant disposés sur la périphérie de l'élément de soupape à distance les uns des autres, **caractérisée en ce que** la soupape de retenue (10) présente sur le côté éloigné du siège de soupape (24) de l'élément de soupape (30) au moins un élément de butée (130) délimitant la course de l'élément de soupape jusque dans une position ouverte de l'élément de soupape et **en ce que** vu en direction de l'axe de soupape (10a), l'élément de soupape (30) et l'élément de butée (130) sont conçus de manière lamellaire et **en ce que** l'élément de soupape et l'élément de butée sont formés de sorte que dans la position ouverte de l'élément de soupape, celui-ci définisse conjointement avec l'élément de butée une chambre à gaz (60) qui est au moins presque fermée par l'élément de soupape se trouvant dans sa position ouverte et l'élément de butée.

4. Soupape de retenue selon la revendication 3, **caractérisée en ce que** l'élément de butée (130) est maintenu mobile par au moins un élément de ressort (132a, 132b, 132c) en direction de l'axe de soupape (10a).

5. Soupape de retenue selon la revendication 1 ou 4, **caractérisée en ce que** chacun des ressorts de rappel (32a, 32b, 32c) et/ou chacun des éléments de ressort (132a, 132b, 132c) est un ressort à matériau plat de type bande.

6. Soupape de retenue selon la revendication 1 ou 3, **caractérisée en ce que** vu en direction de l'axe de soupape, chacun des ressorts de rappel (32a, 32b, 32c) et/ou chacun des éléments de ressort (132a, 132b, 132c) forme une bande voûtée dont une première extrémité (32a', 32b', 32c') porte l'élément de soupape (30) ou l'élément de butée (130).

7. Soupape de retenue selon la revendication 6, **caractérisée en ce que** vu en direction de l'axe de soupape (10a), la bande voûtée présente une forme correspondant à peu près à une section d'une spirale et s'approchant le long de la bande en direction de la première extrémité de bande de l'axe de soupape (10a).

8. Soupape de retenue selon la revendication 6 ou 7, **caractérisée en ce que** vu en direction de l'axe de soupape (10a), les deux bandes voûtées se chevauchent au moins respectivement sur une partie de leur longueur, dont les premières extrémités sont disposées de manière contiguë l'une à l'autre.

9. Soupape de retenue selon la revendication 8, **caractérisée en ce que** chaque bande voûtée est chevauchée sur une première partie de sa longueur par une bande voûtée se trouvant encore radialement à l'extérieur, vu depuis l'axe de soupape (10a) et chevauche sur une autre partie de sa longueur une bande voûtée se trouvant encore à l'intérieur.

10. Soupape de retenue selon l'une quelconque des revendications précédentes, **caractérisée par** une plaque de base (14) pourvue de l'ouverture de passage de gaz d'échappement (22) ainsi que du siège de soupape (24), une plaque d'élément de soupape (16) pourvue de l'élément de soupape (30) et des ressorts de rappel (32a, 32b, 32c) et une plaque d'élément de butée (20) pourvue de l'élément de butée (130) et des éléments de ressort (132a, 132b, 132c).

11. Soupape de retenue selon la revendication 10, **caractérisée en ce que** la plaque d'élément de soupape (16) et/ou la plaque d'élément de butée (20) se compose de tôle en acier à ressorts.

12. Soupape de retenue selon la revendication 1 ou 4, **caractérisée en ce que** l'élément de butée (130) est maintenu par plusieurs éléments de ressort (132a, 132b, 132c) qui sont disposés sur la périphérie de l'élément de butée à distance les uns des autres et **en ce que** vu en direction de l'axe de soupape (10a), les éléments de ressort (132a, 132b, 132c) et les ressorts de rappel (32a, 32b, 32c) sont conçus au moins à peu près de manière identique et sont disposés au moins à peu près de manière coïncidente les uns au-dessus des autres.

13. Soupape de retenue selon la revendication 2 ou 3, **caractérisée en ce que** pour un amortissement défini du mouvement de l'élément de soupape (30) dans sa position ouverte définie par l'élément de butée (130), l'élément de butée et/ou l'élément de soupape présente une petite ouverture de passage de gaz (130").

14. Soupape de retenue selon la revendication 2 ou 3, **caractérisée en ce que** pour la formation de la chambre à gaz (60), l'élément de butée (130) et/ou l'élément de soupape (30) présente au moins un renflement (130', 30') tourné loin de l'autre élément respectif.

15. Soupape de retenue selon la revendication 1 ou 4, **caractérisée en ce que** la constante de ressort des éléments de ressort (132a, 132b, 132c) maintenant l'élément de butée (130) est essentiellement plus grande que la constante de ressort des ressorts de rappel (32a, 32b, 32c) maintenant l'élément de soupape (30).
